# EUROPÄISCHE PATENTSCHRIFT

(11) **EP 2 976 385 B1**
(45) Veröffentlichungstag und Bekanntmachung des Hinweises auf die Patenterteilung: **30.11.2016**
(21) Anmeldenummer: 14708286.1
(22) Anmeldetag: 07.03.2014
(51) Int. Cl.: C08K 3/26, C08K 3/28, C08K 3/32, H01B 3/42, C08J 5/00, C08L 67/02

(54) **POLYESTER FÜR PROFILEXTRUSION UND/ODER ROHREXTRUSION**
POLYESTER FOR BLOW MOULDING, PROFILE EXTRUSION AND/OR TUBULAR EXTRUSION
POLYESTER POUR LE MOULAGE PAR SOUFFLAGE, L'EXTRUSION DE PROFILÉS ET/OU L'EXTRUSION DE TUBES

(30) Priorität: 18.03.2013 EP 13159745
(43) Veröffentlichungstag der Anmeldung: 27.01.2016
(73) Patentinhaber: BASF SE, 67056 Ludwigshafen am Rhein (DE)
(72) Erfinder: KNIESEL, Simon, 69469 Weinheim (DE); EIBECK, Peter, 67346 Speyer (DE); KLENZ, Rainer, 67454 Haßloch (DE)
(74) Vertreter: BASF IP Association
(86) Internationale Anmeldenummer: PCT/EP2014/054430
(87) Internationale Veröffentlichungsnummer: WO 2014/146912

(56) Entgegenhaltungen:
- EP-A2- 0 318 788
- WO-A2-2011/106760
- DE-A1- 19 745 921
- US-A1- 2012 201 986

## Beschreibung

Die Erfindung betrifft die Verwendung von thermoplastischen Formmassen, anthaltend als wesentliche Komponenten
A) 29 bis 99,99 Gew.-% eines Polyesters,
B) 0,01 bis 3,0 Gew.-% eines Alkalimetallsalzes der salpetrigen Säure oder der Phosphor säure oder der Kohlensäure oder deren Mischungen,
   bezogen auf 100 Gew.-% A) und B) sowie darüber hinaus
C) 0 bis 70 Gew.-% weiterer Zusatzstoffe, wobei die Summe der Gew.-% A) bis C) 100 % ergibt,
zur Herstellung von Kabelummantelungen oder Lichtwellenleiterummantelungen durch Blasformen, Profilextrusion und/oder Rohrextrusion.

Weiterhin betrifft die Erfindung Kabel- oder Lichtwellenleiterumhüllungen, erhältlich durch Blasformen, Profilextrusion und/oder Rohrextrusion.

Derartige Komponenten B) sind z.B. in EP-A 214581 und DE-A 2014770 als Keimbildner für PET Compounds beschrieben. Die optischen Eigenschaften der Compounds wurden nicht untersucht.

Aus den Schriften WO2012/143314 und WO2011/144502 ist der Zusatz der o.g. Komponenten B) für lasertransparente Formkörper bekannt. Die speziellen Verwendungen für obige Herstellverfahren werden nicht genannt.

Kriterien für eine Eignung als Kabel- und Lichtwellenleiterumhüllungen sind z.B. aus der WO99/20452 bekannt, wobei hier ein speziell hergestellter Polyester mit definiertem Schmelzeverhalten eingesetzt wird.

Für die Ummantelung von Lichtwellenleitern wird ein gut extrudierbarer und besonders rasch erstarrender Thermoplast mit hoher Steifigkeit benötigt, meist besonders hochmolekulares Polybutylenterephtalat. Besonders geeignet ist auch ein mittels Talkum nukleiertes PBT, das durch eine besonders schnelle Kristallisation hohe Durchsatzgeschwindigkeiten und gute Produkteigenschaften am fertigen Kabel ermöglicht. Die Ummantelung erfolgt durch ein Verfahren, bei dem eine oder mehrere Glasfasern mit Geschwindigkeiten bis zu 500 m/min durch eine Polymerschmelze gezogen werden. Die so entstehenden Ummantelungen sind dünnwandige Röhrchen (typ. Wandstärke 0,1 mm bis 2 mm) von geringem Durchmesser (0,5 bis 6 mm), die in einem kontinuierlichen Extrusionsverfahren mit sehr großen Längen (mehrere km) hergestellt werden. Die Anzahl der eingesetzten Glasfaseradern (aktuell bis zu 96) ist mitbestimmend für den Durchmesser und die Wandstärke der Ummantelung. Die Ummantelung schützt die innenliegenden Glasfasern vor äußeren Einflüssen, wie z.B. mechanische Belastungen (Knick- und Torsionsbelastung) und Verschmutzung.
Ein effizienter Herstellungsprozess für die Ummantelung zeichnet sich dadurch aus, dass das PBT eine hohe Abzugsgeschwindigkeit bei der Extrusion erlaubt und gleichzeitig ein Röhrchen mit möglichst kreisrundem Querschnitt und gleichmäßiger Wanddicke, sehr guten mechanischen Eigenschaften und sehr guter Oberflächengüte entsteht.

Aufgabe der vorliegenden Erfindung war es daher, Polyesterformmassen zur Verfügung zu stellen, welche Kriterien wie hohe Steifigkeit, Festigkeit, geringe Wasseraufnahme, rasche Kristallisation und welche o.g. Kriterien für die Verarbeitbarkeit mittels Blasformen, Profil- und/oder Rohrextrusion zu Kabel- und/oder Lichtwellenleiterummantelungen erfüllen.

Demgemäß wurden die eingangs definierte Verwendung gefunden. Bevorzugte Ausführungsformen sind den Unteransprüchen zu entnehmen.

Als Komponente A) enthalten die erfindungsgemäßen Formmassen 29 bis 99,99, bevorzugt 95 bis 99,95 und insbesondere 99,2 bis 99,9 Gew.-% mindestens eines thermoplastischen Polyesters, bezogen auf die Komponenten A) und B).
Wenigstens einer der Polyester in Komponente A) ist ein teilkristalliner Polyester. Bevorzugt sind Komponenten A), die mindestens 50 Gew.% an teilkristallinen Polyestern enthalten. Besonders bevorzugt liegt dieser Anteil bei 70 Gew.-% (jeweils bezogen auf 100 Gew.-% A)).

Bezogen auf 100% der Formmassen aus A) bis C) (d.h. inklusive C)) enthalten diese
30 bis 100 Gew.% A) + B), vorzugsweise 50 bis 100
0 bis 70 Gew.% C), vorzugsweise 0 bis 50.

Wesentlicher Bestandteil der obigen Bezugsgrößen besteht darin, dass der Anteil der Komponente B) immer auf den Polyester bezogen ist, da dieses Verhältnis innerhalb der genannten Grenzen liegen soll.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.
Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoff-atomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von mindestens 140 ml/g, insbesondere mindestens 145 ml/g (gemessen in einer 0,5 gew.-%igen Lösung in einem Phenol/o-Dichlorbenzolgemisch (Gew.-Verh. 1:1 bei 25°C) gemäß ISO 1628).

Insbesondere bevorzugt sind Polyester, deren Carboxylendgruppengehalt 0 bis 100 mval/kg, bevorzugt 10 bis 50 mval/kg und insbesondere 15 bis 40 mval/kg Poly-ester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, wobei mindestens einer PBT ist. Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:
1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis
100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 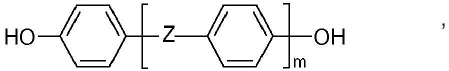 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.
Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).
Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel 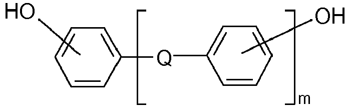 worin Q eine Einfachbindung, eine C₁- bis C₈-Alkylen-, eine C₂- bis C₃-Alkyliden-, eine C₃- bis C₆-Cycloalkylidengruppe, eine C₆- bis C₁₂-Arylengruppe sowie -O-, -S- oder -SO₂- bedeutet und m eine ganze Zahl von 0 bis 2 ist.

Die Diphenole können an den Phenylenresten auch Substituenten haben wie C₁- bis C₆-Alkyl oder C₁- bis C₆-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Als Komponente B) enthalten die erfindungsgemäßen Formmassen 0,01 bis 3 vorzugsweise 0,05 bis 2 und insbesondere 0,1 bis 0,8 Gew.-%, bezogen auf 100 Gew.-% A) + B), eines Alkalimetallsalzes der salpetrigen Säure oder der Phosphorsäure oder der Kohlensäure oder deren Mischungen.

Bevorzugte Alkalimetalle sind Natrium und/oder Kalium.

Bevorzugte Salze B) der salpetrigen Säure sind Natriumnitrit und/oder Kaliumnitrit oder deren Mischungen.

Verfahren zur Herstellung oben genannter anorganischer Salze B) sind dem Fachmann bekannt.

NaHCO₃ ist ein weißes, geruchsfreies Pulver, welches durch Sättigen von Sodalösung mit CO₂ gemäß Solvayverfahren

NaCl + NH₃ + H₂O + CO₂ → NaHCO₃ + NH₄Cl

oder durch Einleiten von CO₂ in Natronlauge erhältlich ist.
Natriumcarbonat Na₂CO₃ (auch Soda genannt) ist als wasserfreies Soda oder auch mit 10, 7 oder 1 Kristallwasser im Handel erhältlich.

Die Herstellung erfolgt entweder nach dem Leblanc Verfahren (aus NaCl + H₂SO₄) oder dem Solvay Verfahren (Calcinieren von NaHCO₃), wobei natürliche Vorkommen als Natursoda ebenso vorhanden sind.

K₂CO₃ (Pottasche) ist ein weißes Pulver und wird in der Regel durch das Magnesia Verfahren hergestellt.
KHCO₃ entsteht im allgemeinen durch Einleiten von CO₂ in K₂CO₃ Lösungen und ist als weißes kristallines Pulver im Handel erhältlich.

Besonders bevorzugte Komponenten B), vorzugsweise Na₂CO₃, weisen ein Aspektverhältnis (Verhältnis der längsten zur kürzesten Dimension bei nichtsphärischen Partikeln) von 1 bis 6, vorzugsweise von 1 bis 2,9 und insbesondere von 1 bis 2 auf. In der Regel wird dieser Parameter aus Lichtmikroskopieaufnahmen mittels Auge gemessen.

Die Partikelgrößenverteilung wird üblicherweise mittels Laserbeugung nach DIN 13320-1 (Gerät Mastersizer 2100, der Firma Malvern) bestimmt.

Besonders bevorzugte Komponenten B), vorzugsweise Na₂CO₃, weisen einen d₅₀ Wert der Partikelgröße von <500 µm, bevorzugt von 20 bis 200 µm, ganz besonders von 40 bis 150 µm auf. (d₅₀ bedeutet 50 Vol.-% der Teilchen haben einen Durchmesser kleiner als der angegebenen Wert, analoge Formulierung für d₁₀ und d₉₀ Werte)

Der d₁₀ Wert beträgt vorzugsweise ≤ 250 µm, insbesondere von 10 bis 100 µm und ganz besonders von 20 bis 80µm.

Der d₉₀ Wert beträgt vorzugsweise ≤ 1000µm, insbesondere von 50 bis 300 µm und ganz besonders von 100 bis 250 µm.

Bevorzugte Salze B) der Phosphorsäure sind Na₃PO₄, K₃PO₄, K₂HPO₄ und Na₂HPO₄ oder deren Mischungen.
Bevorzugte Salzmischungen B) sind Mischungen aus Carbonaten mit Phosphaten, vorzugsweise Na₂CO₃ mit Na₃PO₄. Bevorzugtes gewichtsmäßiges Mischungsverhältnis ist Phosphat: Carbonat 1 : 4 bis 1 : 10, bevorzugt 1 : 4 bis 2 : 5.

Als Komponente C) können die erfindungsgemäßen Formmassen 0 bis 70, insbesondere bis zu 50 Gew.-% weiterer Zusatzstoffe und Verarbeitungshilfsmittel enthalten, welche verschieden von B) und/oder A) sind, bezogen auf 100 Gew.% A), B) und C).

Übliche Zusatzstoffe C) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B.

Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Mono-merengemisch in den Kautschuk eingebaut

R¹C(COOR²)=C(COOR³)R⁴ (I)

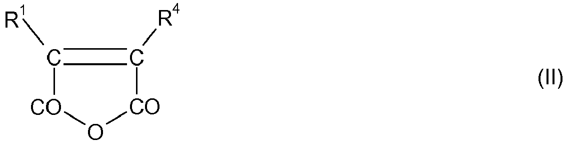

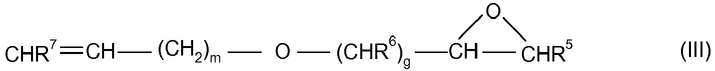

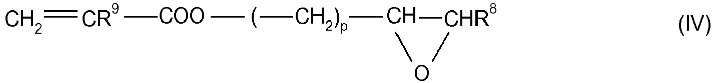

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
50 bis 98, insbesondere 55 bis 95 Gew.-% Ethylen,
0,1 bis 40, insbesondere 0,3 bis 20 Gew.-% Glycidylacrylat und/oder Glycidylmethacrylat, (Meth)acrylsäure und/oder Maleinsäureanhydrid, und
1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 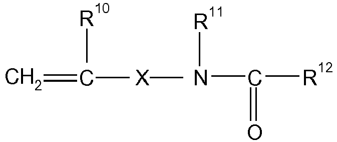 eingeführt werden können,
wobei die Substituenten folgende Bedeutung haben können:
R¹⁰ Wasserstoff oder eine C₁- bis C₄-Alkylgruppe,
R¹¹ Wasserstoff, eine C₁- bis C₈-Alkylgruppe oder eine Arylgruppe, insbesondere Phenyl,
R¹² Wasserstoff, eine C₁- bis C₁₀-Alkyl-, eine C₆- bis C₁₂-Arylgruppe oder -OR¹³
R¹³ eine C₁- bis C₈-Alkyl- oder C₆- bis C₁₂-Arylgruppe, die gegebenenfalls mit O- oder N-haltigen Gruppen substituiert sein können,
X eine chemische Bindung, eine C₁- bis C₁₀-Alkylen- oder C₆-C₁₂-Arylengruppe oder 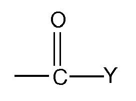
Y O-Z oder NH-Z und
Z eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethyl-acrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe C) werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasern, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein.
Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 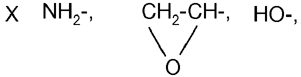
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,1 bis 1,5 und insbesondere 0,2 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln der Komponente B) auf das Granulat) werden und dann die restlichen Ausgangsstoffe einzeln und/oder ebenfalls gemischt hinzugegeben werden. Die Mischtemperaturen liegen in der Regel bei 230 bis 290°C. Vorzugsweise kann Komponente B) auch hot feed oder direkt in den Einzug des Extruders zugegeben werden.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

In einer weiteren bevorzugten Herstellungsmethode wird zunächst ein Batch (Konzentrat) aus A) und B) hergestellt, wobei die Komponente B bis zu 20 Gew.-%, vorzugsweise bis zu 10 Gew.-% in A) (bezogen auf A) + B)) eingearbeitet wird. Dieses Konzentrat wird bei der Herstellung der Rohr- oder Profilextrudate zum Polyester (ohne Zusatzstoffe) als Granulat zudosiert, oder im entsprechenden Mengenverhältnis, z.B. im Taumelmischer vorgemischt, konfektioniert und als Formteil extrudiert.

Die erfindungsgemäß verwendbaren Formmassen eignen sich zur Herstellung von Formkörpern mittels Blasformen, Profil- und Rohrextrusion zu Kabel- und/oder Lichtwellenleiterumhüllungen, da eine hohe Steifigkeit/Festigkeit, geringe Wasseraufnahme, rasche Kristallisation und gute Verarbeitbarkeit vorliegt.
Derartige Formkörper weisen Vorteile bei der Druckfestigkeit, Knickbeständigkeit und der Hydrolysebeständigkeit auf.

### Beispiele

### Komponente A:

Polybutylenterephtalat mit einer Viskosität von 155 ml/g und einem Carboxylendgruppengehalt von 34 mval/kg + (Ultradur® B 6500 der BASF SE) (VZ gemessen in 0,5 gew.-%iger Lösung aus Phenol/o-Dichlorbenzol, 1:1 Mischung bei 25 °C gemäß ISO 1628).

### Komponente B/1

Na₂CO₃

### Komponente B/2

K₂CO₃

### Komponente B/3

NaNO₂

### Komponente C/1

Talkum

### Komponente C/2

Ca-Stearat

Die Herstellung der Formmassen erfolgte auf einer ZSK25 bei 250 bis 260 °C flachem Temperaturprofil und anschließender Granulierung.

### I. Untersuchung der Compounds

**Tabelle 1: Zusammensetzungen**

| Komponenten [Gew.-%] | V1 | Ex. (1) | Ex. (2) | Ex (3) |
|---|---|---|---|---|
| | [Gew. %] | [Gew. %] | [Gew. %] | [Gew. %] |
| A | 99,9 | 99,6 | 99,6 | 99,6 |
| B/1 | - | 0,4 | - | - |
| B/2 | - | - | 0,4 | - |
| B/3 | - | - | - | 0,4 |
| C/1 | 0,04 | - | - | - |
| C/2 | 0,06 | - | - | - |

**Tabelle 2: Erhöhung der Schmelzesteifigkeit/Scherviskosität mittels Additivierung:**

| Schmelzvolumenrate [250°C/2,16 kg] | Einheit | V1 | Ex. (1) | Ex. (2) | Ex (3) |
|---|---|---|---|---|---|
| Retentionszeit 4 min | cm³/10 min | 9,7 | 5,8 | 9,9 | 10,8 |
| Retentionszeit 10 min | cm³/10 min | 11,4 | 4,4 | 8,8 | 9,7 |
| Retentionszeit 20 min | cm³/10 min | 14,4 | 4,2 | 8,9 | 11,0 |
| Retentionszeit 30 min | cm³/10 min | 15,9 | 4,2 | 10,3 | 10,5 |

Die Beispiele in Tabelle (2) illustrieren die verbesserte Schmelzesteifigkeit bei Zugabe der erfindungsgemäßen Salze im Vergleich zum nicht erfindungsgemäß additivierten Polyester. Beim Polyester ohne Additive steigt in Folge von Polymerabbau bei langer Verweilzeit die Schmelzvolumenrate mit verlängerter Retentionszeit an, bei den additivierten Proben bleibt die Schmelzeflussrate (bestimmt gemäß ISO 1133) konstant.

**Tabelle 3: Erhöhung der Rekristallisationstemperatur durch Additivierung**

| Rekristallisation | Einheit | A | V1 | Ex. (1) | Ex. (2) | Ex. (3) |
|---|---|---|---|---|---|---|
| T_{pc} | °C | 176.7 | 195.7 | 200.2 | 194,0 | 200.7 |

Tabelle 3 zeigt kalorimetrische Untersuchungen mittels DSC gemäß ISO 11357, Aufheiz- und Abkühlgeschwindigkeit 20K/min. Die Peaktemperatur der Kristallisation T_{pc} wurde im ersten Abkühllauf ermittelt. Die Beispiele in Tabelle (3) illustrieren die Rekristallisation bei erhöhter Temperatur bei Zugabe der erfindungsgemäßen Salze im Vergleich zum nicht additivierten Polyester. Ein sehr starker Anstieg kann bereits beim mit Talkum nukleierten Material festgestellt werden. Bei den erfindungsgemäßen Compounds kann ein weiterer Anstieg um 4.5-5.0 °C relativ zum Vergleichsversuch V1 beobachtet werden.

### II. Herstellung von additivierten Lichtwellenleiterummantellungen

Nach einem bevorzugten erfindungsgemäßen Prozess werden die mit Metallcarbonaten additivierten Lichtwellenleiterummantelungen über Additivkonzentrate hergestellt. Die Konzentrate wurden auf einem Zweischneckenextruder mit 25mm Schneckendurchmesser hergestellt (siehe Tabelle (4)). Die Dosierung der Additive erfolgte hierbei zusammen mit dem Granulat im Kalteinzug. In einem weiteren Schritt wurden die Konzentrate in einem Mischer mit nicht additiviertem Polymergranulat hoher Viskosität gemischt. Hiermit konnten Lichtwellenleiterummantelungen mit hochmolekularem Polybutylenterephthalat erhalten werden.

**Tabelle 4: Herstellung der Konzentrate**

| Komponente | Konz. (1) | Konz. (2) |
|---|---|---|
| | [Gew.- %] | [Gew.- %] |
| A | 95 | 95 |
| B/1 | 5 | - |
| B/2 | - | 5 |

### Herstellung der erfindungsgemäßen Granulatmischungen:

Die Mischungen wurden als Granulat/Granulat-Mischungen auf einem Taumelmischer hergestellt.

**Tabelle 5: Zusammensetzung der erfindungsgemäßen Kabelummantelungen**

| Komponente [Gew.-%] | V1 | Ex (4) | Ex (5) |
|---|---|---|---|
| A | 99,9 | 92 | 92 |
| C/1 | 0,04 | - | - |
| C/2 | 0,06 | - | - |
| Konz (1) | - | 8 | - |
| Konz (2) | - | - | 8 |

### Herstellung von ummantelten Lichtwellenleiterkabeln:

Die weiterführende Verarbeitung dieser Granulatmischungen erfolgte mittels eines Einschneckenextruders mit Ringdüse. Die Herstellung solcher Ummantelungen ist z.B beschrieben in der folgenden Schrift: H.J. Mair; Kunststoffe in der Kabeltechnik, Kapitel 9, Expertverlag 1983. Die Ummantelung wurde hierbei mit 12 Glasfaseradern als Kern durchgeführt. Durch den Durchmesser der einzelnen Glasfasern und die Geometrie der Glasfaseranordnung ergab sich der Innendurchmesser der Ummantelungen zu 1,3 mm.

### Charakterisierung der Kabelummantelungen:

Die erfindungsgemäße Ummantelung zeigt dabei eine Dickeverteilung von 0,35 +/- 0,05 mm wohingegen beim Stand der Technik eine Wanddickenverteilung im Bereich von 0,6 +/-0,2mm (Tabelle 6). Der erfindungsgemäße Compound ermöglicht damit Kabelummantelungen mit einer sehr geringen Dickeschwankung.

**Tabelle 6: Optische Erscheinung und Dickenverteilung der Ummantelungen**

| | V1 | Ex (4) |
|---|---|---|
| Dicke der Kabelummantelung | 0,6 +/-0,2mm | 0,35 +/-0,05mm |

**Tabelle 7: Mechanische Eigenschaften von Lichtwellenleiterummantelungen**

| Eigenschaft | Einheit | V1 | Ex (4) | Ex (5) |
|---|---|---|---|---|
| Querdruckfestigkeit | N/dm | 600 | 1400 | 1300 |

Die erfindungsgemäß additivierten Kabelummantelungen weisen eine wesentlich höhere Querdruckfestigkeit auf. Die Bestimmung der Querdruckfestigkeit wurde gemäß der Norm EN 187000/504 durchgeführt.

Wie in Tabelle 8 zu sehen ist, zeichnen sich die nach dem erfindungsgemäßen Verfahren hergestellten Glasfaserummantelungen durch eine verbesserte Hydrolysebeständigkeit im Vergleich zum Stand der Technik aus.

**Tabelle 8: Hydrolysebeständigkeit der erfindungsgemäßen Materialien anhand der Viskositätszahl nach unterschiedlichen Lagerzeiten**

| Verweilzeit bei 85 °C, 85% relativer Luftfeuchtigkeit | Einheit | (V1) | Ex (4) |
|---|---|---|---|
| 0 h | cm³/g | 146,5 | 141 |
| 100 h | cm³/g | 110 | 135,5 |
| 250 h | cm³/g | 102 | 128,5 |
| 500 h | cm³/g | 92,2 | 120 |
| 1000 h | cm³/g | 71,2 | 105 |
| 2000 h | cm³/g | 46 | 74,7 |

## Patentansprüche

1. Verwendung von thermoplastischen Formmassen, enthaltend als wesentliche Komponenten
A) 29 bis 99,99 Gew.-% eines Polyesters,
B) 0,01 bis 3,0 Gew.-% eines Alkalimetallsalzes der salpetrigen Säure oder der Phosphorsäure oder der Kohlensäure oder deren Mischungen,
bezogen auf 100 Gew.-% A) und B) sowie darüber hinaus
C) 0 bis 70 Gew.-% weiterer Zusatzstoffe, wobei die Summe der Gew.-% A) bis C) 100 % ergibt,
zur Herstellung von Kabelummantelungen oder Lichtwellenleiterummantelungen durch Blasformen, Profilextrusion und/oder Rohrextrusion.

2. Verwendung nach Anspruch 1, wobei das Alkalimetall der Komponente B) aus Natrium oder Kalium oder deren Mischungen aufgebaut ist.

3. Verwendung nach den Ansprüchen 1 oder 2, wobei die Komponente A) eine Viskositätszahl (VZ) von mindestens 140 ml/g gemäß ISO 1628 aufweist.

4. Verwendung nach den Ansprüchen 1 bis 3, wobei die Komponente A) ein Carboxylendgruppengehalt von 10 bis 50 mval/kg Polyester aufweist.

5. Verwendung nach den Ansprüchen 1 bis 4, wobei die Komponente B) aus NaNO₂, KNO₂, Na₂CO₃, K₂CO₃, NaHCO₃, KHCO₃, Na₃PO₄, K₃PO₄, Na₂HPO₄, K₂HPO₄ oder deren Mischungen aufgebaut ist.

6. Kabelummantelungen oder Lichtwellenleiterummantelungen erhältlich gemäß der erfindungsgemäßen Verwendung der thermoplastischen Formmassen gemäß den Ansprüchen 1 bis 5.

## Claims

1. The use of thermoplastic molding compositions comprising, as essential components
A) from 29 to 99.99% by weight of a polyester,
B) from 0.01 to 3.0% by weight of an alkali metal salt of nitrous acid or of phosphoric acid or of carbonic acid, or a mixture of these,
based on 100% by weight of A) and B), and also moreover
C) from 0 to 70% by weight of further additives, where the sum of the % by weight values for A) to C) is 100 %,
for the production of cable sheathing or optical waveguide sheathing via blowmolding, profile extrusion, and/or pipe extrusion.

2. The use according to claim 1, where the alkali metal of component B) is composed of sodium or potassium, or of a mixture of these.

3. The use according to claim 1 or 2, where the viscosity number (VN) of component A) is at least 140 ml/g in accordance with ISO 1628.

4. The use according to claims 1 to 3, where the terminal carboxy group content of component A) is from 10 to 50 meq/kg of polyester.

5. The use according to claims 1 to 4, where component B) is composed of NaNO₂, KNO₂, Na₂CO₃, K₂CO₃, NaHCO₃, KHCO₃, Na₃PO₄, K₃PO₄, Na₂HPO₄, K₂HPO₄, or a mixture of these.

6. Cable sheathing or optical waveguide sheathing, obtainable according to the claimed use of the thermoplastic molding compositions according to claims 1 to 5.

## Revendications

1. Utilisation de masses de moulage thermoplastiques, contenant, en tant que composants essentiels,
A) 29 à 99,99 % en poids d'un polyester,
B) 0,01 à 3,0 % en poids d'un sel de métal alcalin d'acide nitreux ou d'acide phosphorique ou d'acide carbonique ou de leurs mélanges,
par rapport à 100 % en poids de A) et de B) ainsi qu'en outre
C) 0 à 70 % en poids d'additifs supplémentaires, la somme des pourcentages en poids de A) à C) étant de 100 %,
pour la fabrication de gaines de câbles ou de gaines de conducteurs à fibre optique par formage par soufflage, extrusion de profilés et/ou extrusion de tubes.

2. Utilisation selon la revendication 1, dans laquelle le métal alcalin du composant B) est obtenu à partir de sodium ou de potassium ou de leurs mélanges.

3. Utilisation selon les revendications 1 ou 2, dans laquelle le composant A) présente un indice de viscosité (VZ) d'au moins 140 ml/g selon ISO 1628.

4. Utilisation selon les revendications 1 à 3, dans laquelle le composant A) présente une teneur en groupes terminaux carboxyles de 10 à 50 mval/kg de polyester.

5. Utilisation selon les revendications 1 à 4, dans laquelle le composant B) est obtenu à partir de NaNO₂, KNO₂, Na₂CO₃, K₂CO₃, NaHCO₃, KHCO₃, Na₃PO₄, K₃PO₄, Na₂HPO₄, K₂HPO₄ ou leurs mélanges.

6. Gaines de câbles ou gaines de conducteurs à fibre optique pouvant être obtenues selon l'utilisation selon l'invention des masses de moulage thermoplastiques selon les revendications 1 à 5.
